# FASCICULE DE BREVET EUROPEEN

(11) **EP 1 901 946 B1**
(45) Date de publication et mention de la délivrance du brevet: **30.12.2009**
(21) Numéro de dépôt: 06779018.8
(22) Date de dépôt: 05.07.2006
(51) Int. Cl.: B60R 21/34, B62D 25/16, B62D 25/08

(54) **AILE AVANT DE VEHICULE AUTOMOBILE A CLOISON D'ETANCHEITE DEFORMABLE**
KOTFLÜGEL EINES KRAFTFAHRZEUGS MIT VERFORMBAREM ABDICHTUNGSSCHOTT
MOTOR VEHICLE FRONT WING WITH DEFORMABLE SEALING BULKHEAD

(30) Priorité: 12.07.2005 FR 0507483
(43) Date de publication de la demande: 26.03.2008
(73) Titulaire: Renault SAS, 92100 Boulogne Billancourt (FR)
(72) Inventeur: NOEL, Gilles, F-78720 Saint Forget (FR)
(86) Numéro de dépôt international: PCT/FR2006/050678
(87) Numéro de publication internationale: WO 2007/006996

(56) Documents cités:
- DE-A1- 10 063 582
- DE-A1- 10 233 474
- US-A1- 2004 007 901
- PATENT ABSTRACTS OF JAPAN vol. 2002, no. 02, 2 avril 2002 (2002-04-02) -& JP 2001 287669 A (TOYOTA MOTOR CORP), 16 octobre 2001 (2001-10-16)

## Description

La présente invention se rapporte à une aile avant de véhicule automobile à cloison d'étanchéité déformable.

Une telle aile est notamment destinée à constituer des moyens d'amortissement à l'avant d'un véhicule, entre un bouclier et un pare-brise, permettant d'absorber de l'énergie en cas de choc piéton et ce, afin de limiter les blessures dudit piéton.

Usuellement, les véhicules automobiles comportent un châssis et un groupe motopropulseur installé sur ledit châssis, et ledit groupe motopropulseur est recouvert d'un capot. Ladite aile prolonge ledit capot en longeant latéralement ledit groupe motopropulseur et prend appui sur un longeron du châssis. En outre, l'aile comporte une paroi externe et une cloison d'étanchéité déformable, afin d'absorber l'énergie en cas de choc, ladite paroi externe présentant un bord supérieur adapté à border ledit capot, ledit bord supérieur étant prolongé par un rebord interne qui s'étend sous ledit capot.

Ladite cloison d'étanchéité déformable relie ledit rebord interne et ledit châssis en s'étendant de manière incurvée vers ladite paroi externe, entre ladite paroi externe et ledit groupe motopropulseur, afin de préserver ce dernier notamment des remontées d'eau projetées notamment par les roues du véhicule. En outre, ladite cloison d'étanchéité déformable est adaptée à se replier sur elle-même en se déportant latéralement vers ladite paroi externe lorsque l'aile avant est enfoncée vers ledit châssis sous l'effet d'un choc. De la sorte, l'énergie absorbée par l'aile est transmise pour plier ladite cloison d'étanchéité.

On pourra notamment se référer au document DE102 33474, lequel décrit un tel dispositif pour autoriser la déformation de l'aile.

Un inconvénient d'une telle aile, équipée de ladite cloison d'étanchéité déformable, réside dans la trajectoire de sa course au cours de la déformation. En effet, cette trajectoire dépend de l'angle avec lequel le véhicule percute l'éventuel piéton, et n'étant alors pas contrôlée, il est difficile d'en prévoir les répercussions, tant sur le piéton que sur le véhicule.

Un problème qui se pose alors, et que vise à résoudre la présente invention est de fournir une cloison d'étanchéité déformable, qui permette de mieux contrôler la trajectoire de la course de l'aile.

La présente invention propose une aile avant déformable de véhicule automobile, ledit véhicule comportant un châssis et un groupe motopropulseur installé sur ledit châssis, ledit groupe motopropulseur étant recouvert d'un capot, ladite aile prolongeant ledit capot en longeant latéralement ledit groupe motopropulseur et en prenant appui sur ledit châssis, ladite aile comportant une paroi externe et une cloison d'étanchéité déformable pour isoler le groupe motopropulseur, ladite paroi externe présentant un bord supérieur adapté à border ledit capot, ledit bord supérieur étant prolongé par un rebord interne qui s'étend sous ledit capot, ladite cloison d'étanchéité déformable reliant ledit rebord interne et ledit châssis en s'étendant de manière incurvée vers ladite paroi externe entre ladite paroi externe et ledit groupe motopropulseur, ladite cloison d'étanchéité déformable étant adaptée à se replier sur elle-même en se déportant latéralement vers ladite paroi externe lorsque l'aile avant est enfoncée vers ledit châssis sous l'effet d'un choc ; selon l'invention, ladite cloison d'étanchéité déformable présente deux parois latérales sensiblement parallèles et incurvées vers ladite paroi externe, de façon à guider latéralement ladite aile avant lorsqu'elle est enfoncée.

Le document JP 2001 287 669 A décrit une telle aile déformable.

Ainsi, une caractéristique de l'invention réside dans la mise en oeuvre d'une cloison d'étanchéité à double paroi, sensiblement parallèles, qui évite à la cloison d'étanchéité de pivoter différemment par rapport à la paroi externe de l'aile et par rapport au châssis. De la sorte, lorsque l'aile avant est enfoncée vers le châssis, elle est guidée en translation selon une trajectoire déterminée grâce aux parois latérales qui se plient simultanément et parallèlement, ce qui permet de prévoir la position relative des différents éléments de l'aile, afin d'éviter notamment l'émergence de parties contondantes. En outre, cela permet de prévoir la position des éléments susceptibles d'être endommagés.

Avantageusement, lesdites parois latérales présentant respectivement une aile supérieure reliée audit rebord interne et une aile inférieure reliée audit châssis, lesdites parois latérales sont maintenues espacées l'une de l'autre par une paroi supérieure et une paroi inférieure, ladite paroi supérieure reliant les ailes supérieures et ladite paroi inférieure reliant les ailes inférieures de façon à former une cloison d'étanchéité tubulaire, par exemple d'une seule pièce. De la sorte, outre que la réalisation de la cloison d'étanchéité est plus économique, lorsque l'aile avant est enfoncée, la paroi supérieure est rapprochée de la paroi inférieure à laquelle elle reste orientée sensiblement de la même façon, tandis que les parois latérales se plient. Elles se plient tout d'abord respectivement sur elle-même, et elles s'articulent par rapport aux parois inférieures et supérieures.

Selon un mode de réalisation de l'invention, particulièrement avantageux, lesdites parois supérieure et inférieure présentent des largeurs sensiblement identiques et sont sensiblement parallèles entre elles, ce qui permet de réaliser une cloison d'étanchéité tubulaire symétrique par rapport à un plan parallèle aux parois supérieure et inférieure et qui s'étend entre les deux en coupant les parois latérales sensiblement au centre de leur concavité, que l'on définira plus en détail ci-après. Ainsi, l'enfoncement de l'aile avant provoque une déformation régulière de la cloison d'étanchéité et par conséquent un parfait guidage latéral.

De plus, selon l'invention, l'une desdites parois latérales incurvées, opposée à ladite paroi externe par rapport à l'autre desdites parois latérales et qui s'étend donc en regard du groupe motopropulseur, présente une surface concave équipée d'une nervure d'appui étendue elle, au centre de la concavité et, parallèlement entre les parois supérieure et inférieures et qui est adaptée à être déportée latéralement. Cette nervure d'appui, permet de former support, par exemple pour une grille ou une cloison démontable, et en s'écartant, lors de la déformation elle autorise par là même, le mouvement de la grille ou de la cloison démontable.

Préférentiellement, lesdites parois latérales présentent une section droite en V incliné, ou formant chevrons, de façon à former avec les parois supérieures et inférieures un double parallélogramme déformable, permettant de guider précisément la course de l'aile lors d'un choc piéton, selon une trajectoire sensiblement rectiligne.

D'autres particularités et avantages de l'invention ressortiront à la lecture de la description faite ci après d'un mode-de-réalisation particulier de l'invention, donné à titre indicatif mais non limitatif, en référence aux dessins annexés sur lesquels :
- la Figure 1 est une vue schématique en section verticale d'une aile avant conforme à l'invention dans un premier état ; et,
- la Figure 2 est une vue schématique de l'aile avant illustrée sur la Figure 1, dans un second état.

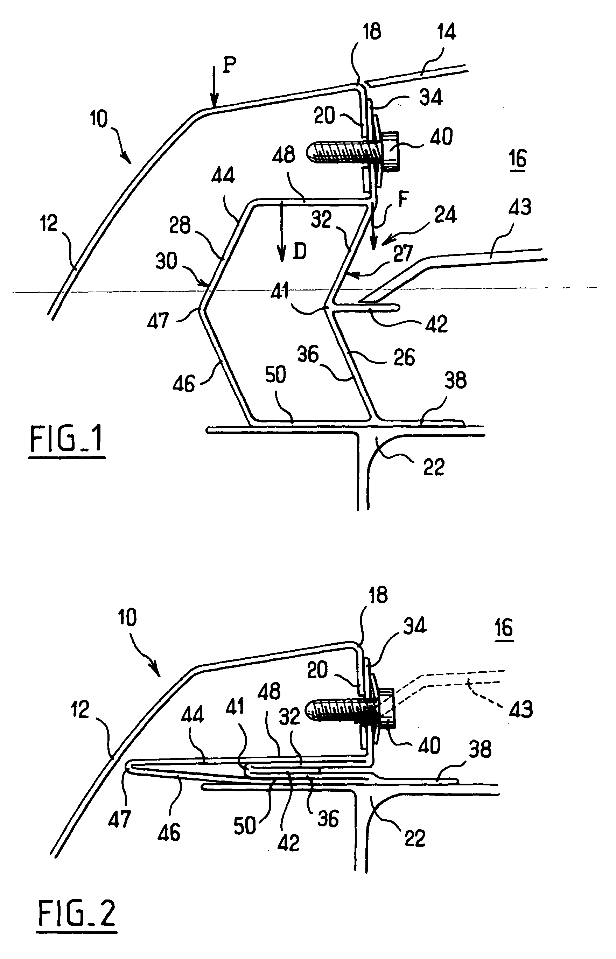

La Figure 1 illustre en section verticale et transversale, une aile avant 10 de véhicule automobile conforme à l'invention. L'aile avant 10 présente une paroi externe 12 qui remonte vers un capot 14 du véhicule automobile. Le capot 14, abrite un groupe motopropulseur 16. La paroi externe 12 présente un bord supérieur 18 qui borde le capot 14, le bord supérieur 18 étant prolongé par un rebord interne 20 qui s'étend sensiblement verticalement en dessous du capot 14. Par ailleurs, le véhicule automobile comporte un châssis sur lequel repose le groupe motopropulseur 16, et dont une portion 22 formant longeron apparaît sur la Figure 1.

Par ailleurs, une cloison d'étanchéité 24, réalisée par exemple dans un matériau métallique, s'étend entre la paroi externe 12 et le groupe motopropulseur 16, du longeron 22 jusqu'au bord supérieur 18, afin de le préserver des éventuelles projections qui proviennent du sol. La cloison d'étanchéité 24, présente deux parois latérales en V couché, une première paroi latérale 26, dont une surface concave 27 s'étend en regard du groupe motopropulseur 16, et une seconde paroi latérale 28 dont une surface convexe 30 s'étend elle, en regard de la paroi externe 12. La première paroi latérale 26, présente une première aile supérieure 32, qui se prolonge par une aile libre supérieure de raccordement 34 et une première aile inférieure 36 qui se prolonge par une aile libre inférieure de raccordement 38. La première aile inférieure 36 et la première aile supérieure 32 forme un angle obtus, par exemple compris entre 100 et 170°, et à une première jonction 41 des deux ailes correspondant à un centre de concavité, s'étend une nervure d'appui 42 en saillie de la surface concave 27 sensiblement selon une bissectrice, et sensiblement horizontalement. L'aile libre supérieure de raccordement 34, sensiblement verticale, est directement appliquée contre le rebord interne 20 et y est solidarisée par l'intermédiaire de moyens vissables 40, tandis que l'aile libre inférieure de raccordement 38, sensiblement horizontale, est en appui sur la portion 22 du longeron et orientée vers le groupe motopropulseur 16.

Par ailleurs, la nervure d'appui 42 est adaptée à former support pour une grille 43 et/ou à maintenir une cloison démontable non représentée.

La seconde paroi latérale 28 présente une seconde aile supérieure 44, parallèle à la première aile supérieure 32, et une seconde aile inférieure 46, parallèle à la première aile inférieure 36 et elles se rejoignent à une seconde jonction 47. Les deux ailes supérieures 44, 32 et les deux ailes inférieures 46, 36 sont respectivement reliées entre elles par une paroi supérieure 48 et une paroi inférieure 50, étendues parallèlement entre elles, la paroi inférieure 50 étant en appui contre la portion 22 du longeron, dans le prolongement de l'aile libre inférieure de raccordement 38. Ainsi, la cloison d'étanchéité 24, est susceptible d'être réalisée à partir d'un organe tubulaire rectangulaire présentant, en section droite, deux largeurs opposées correspondant respectivement à la paroi supérieure 48 et à la paroi inférieure 50, et respectivement deux longueurs opposées correspondant aux deux parois latérales 26, 28 ; les deux longueurs ayant été alors pliées dans leur milieu et suivant la même direction.

Ainsi, lorsqu'un choc piéton survient et tend à exercer une pression P de haut en bas sur la paroi externe 12 de l'aile, l'effort se répercute sur l'aile libre supérieure de raccordement 34, qui va alors être guidée en translation verticalement vers la portion 22 du longeron grâce au mode de déformation de la cloison d'étanchéité 24 que l'on va maintenant décrire. Bien évidemment, l'épaisseur des parois et notamment au niveau des angles de pliure, va déterminer l'intensité de la pression P à partir de laquelle la cloison d'étanchéité 24 va se déformer.

Dès que cette pression P est atteinte, une force verticale F est appliquée à la jonction entre la paroi supérieure 48 et la première aile supérieure 32 de telle sorte que la paroi supérieure 48 tend à être entraînée vers la paroi inférieure 50 selon une direction verticale D orientée de haut en bas. Ainsi, et sensiblement simultanément, les deux premières ailes, supérieure 32 et inférieure 36, et parallèlement les deux secondes ailes, 44, 46, tendent à se replier respectivement l'une vers l'autre au fur et à mesure que la paroi supérieure 48 se rapproche de la paroi inférieure 50. En outre, les deux jonctions 41, 47 sont entraînées simultanément et latéralement vers la paroi externe 12, de telle sorte que la nervure d'appui 42 est également déportée vers la paroi externe 12 et par conséquent que la grille 43 échappe à la portée de la nervure d'appui 42.

De la sorte, et en bout de course, la trajectoire de l'aile avant 10 ayant été sensiblement rectiligne, selon la direction D verticale, et ainsi que le montre la figure 2, d'une part, les deux premières ailes 32, 36 sont sensiblement parallèles entre elles et prisent entre la paroi inférieure 50 et la paroi supérieure 48 et au niveau du longeron 22, la nervure d'appui 42 étant aplatie entre les deux, et d'autre part, les deux secondes ailes 44, 46 sont également pliées l'une vers l'autre.

Ainsi, l'énergie d'impact de l'aile avant 10 a été absorbée par les différentes parois qui se sont pliés respectivement les unes par rapport aux autres au niveau de six angles différents.

## Revendications

1. Aile avant déformable de véhicule automobile, ledit véhicule comportant un châssis et un groupe motopropulseur (16) installé sur ledit châssis, ledit groupe motopropulseur étant recouvert d'un capot (14), ladite aile prolongeant ledit capot en longeant latéralement ledit groupe motopropulseur et en prenant appui sur ledit châssis (22), ladite aile comportant une paroi externe (12) et une cloison d'étanchéité déformable (24) pour isoler le groupe motopropulseur (16), ladite paroi externe (12) présentant un bord supérieur (18) adapté à border ledit capot (14), ledit bord supérieur étant prolongé par un rebord interne (20) qui s'étend sous ledit capot, ladite cloison d'étanchéité déformable (24) reliant ledit rebord interne (20) et ledit châssis (22) en s'étendant de manière incurvée vers ladite paroi externe (12) entre ladite paroi externe et ledit groupe motopropulseur (16), ladite cloison d'étanchéité déformable (24) étant adaptée à se replier sur elle-même en se déportant latéralement vers ladite paroi externe (12) lorsque l'aile avant est enfoncée vers ledit châssis (22) sous l'effet d'un choc, ladite cloison d'étanchéité déformable (24) présentant deux parois latérales (26, 28) sensiblement parallèles et incurvées vers ladite paroi externe (12), de façon à guider latéralement ladite aile avant (10) lorsqu'elle est enfoncée
**caractérisée en ce que** l'une desdites parois latérales (26, 28) incurvées, opposée à ladite paroi externe (12) par rapport à l'autre desdites parois latérales, présente une surface concave (27) équipée d'une nervure d'appui (42) formant support adaptée à être déportée latéralement.

2. Aile avant déformable selon la revendication 1, **caractérisée en ce que**, lesdites parois latérales (26, 28) présentant respectivement une aile supérieure (32 ; 44) reliée audit rebord interne (20) et une aile inférieure (36 ; 46) reliée audit châssis (22), lesdites parois latérales (26, 28) sont maintenues espacées l'une de l'autre par une paroi supérieure (48) et une paroi inférieure (50), ladite paroi supérieure reliant les ailes supérieures (32, 44) et ladite paroi inférieure reliant les ailes inférieures (36, 46).

3. Aile avant déformable selon la revendication 2, **caractérisée en ce que** lesdites parois supérieure (48) et inférieure (50) présentent des largeurs sensiblement identiques et sont sensiblement parallèles entre elles.

4. Aile avant déformable selon l'une quelconque des revendications 1 à 4, **caractérisée en ce que**, lesdites parois latérales (26, 28) présentent une section droite en V.

## Claims

1. Motor vehicle deformable front wing, the said vehicle comprising a chassis and a propulsion unit (16) installed on the said chassis, the said propulsion unit being covered by a bonnet (14), the said wing extending the said bonnet laterally alongside the said propulsion unit and resting on the said chassis (22), the said wing comprising an external wall (12) and a deformable sealing bulkhead (24) to isolate the propulsion unit (16), the said external wall (12) having an upper edge (18) designed to border the said bonnet (14), the said upper edge being extended by an internal rim (20) which extends under the said bonnet, the said deformable sealing bulkhead (24) connecting the said internal rim (20) and the said chassis (22) by running in a curve towards the said external wall (12) between the said external wall and the said propulsion unit (16), the said deformable sealing bulkhead (24) being designed to fold on itself becoming laterally offset towards the said external wall (12) when the front wing is pushed in towards the said chassis (22) under the effect of an impact, the said deformable sealing bulkhead (24) having two lateral walls (26, 28) that are substantially parallel and curved towards the said external wall (12) so as to guide the said front wing (10) laterally when it is pushed in
**characterized in that** one of the said curved lateral walls (26, 28), on the opposite side to the said external wall (12) by comparison with the other of the said lateral walls, has a concave surface (27) equipped with a support-forming bearing rib (42) designed to be offset laterally.

2. Deformable front wing according to Claim 1, **characterized in that**, with the said lateral walls (26, 28) respectively having an upper flange (32; 44) connected to the said internal rim (20) and a lower flange (36; 46) connected to the said chassis (22), the said lateral walls (26, 28) are kept spaced apart from one another by an upper wall (48) and a lower wall (50), the said upper wall connecting the upper flanges (32, 44) and the said lower wall connecting the lower flanges (36, 46).

3. Deformable front wing according to Claim 2, **characterized in that** the said upper (48) and lower (50) walls are of substantially identical width and are substantially parallel to one another.

4. Deformable front wing according to any one of Claims 1 to 3, **characterized in that** the said lateral walls (26, 28) have a V-shaped cross section.

## Patentansprüche

1. Verformbarer vorderer Kotflügel eines Kraftfahrzeugs, wobei das Fahrzeug ein Fahrgestell und eine Antriebseinheit (16) aufweist, die auf dem Fahrgestell installiert ist, wobei die Antriebseinheit von einer Haube (14) bedeckt ist, wobei der Kotflügel die Haube verlängert, indem er sich seitlich entlang der Antriebseinheit erstreckt und auf dem Fahrgestell (22) aufliegt, wobei der Kotflügel eine Außenwand (12) und eine verformbare Dichtungstrennwand (24) aufweist, um die Antriebseinheit (16) zu isolieren, wobei die Außenwand (12) einen oberen Rand (18) aufweist, der die Haube (14) umranden kann, wobei der obere Rand von einer inneren Randleiste (20) verlängert wird, die sich unter der Haube erstreckt, wobei die verformbare Dichtungstrennwand (24) die innere Randleiste (20) und das Fahrgestell (22) verbindet, indem sie sich zur Außenwand (12) gekrümmt zwischen der Außenwand und der Antriebseinheit (16) erstreckt, wobei die verformbare Dichtungstrennwand (24) geeignet ist, um sich auf sich selbst umzufalten, indem sie sich seitlich zur Außenwand (12) verlagert, wenn der vordere Kotflügel unter der Wirkung eines Aufpralls zum Fahrgestell (22) hin eingedrückt wird, wobei die verformbare Dichtungstrennwand (24) zwei im Wesentlichen parallele und zur Außenwand (12) hin gekrümmte Seitenwände (26, 28) aufweist, um den vorderen Kotflügel (10) seitlich zu führen, wenn er eingedrückt wird,
**dadurch gekennzeichnet, dass** eine der gekrümmten Seitenwände (26, 28) entgegengesetzt zur Außenwand (12) bezüglich der anderen der Seitenwände eine konkave Fläche (27) hat, die mit einer einen Träger bildenden Auflagerippe (42) versehen ist, welche seitlich versetzt werden kann.

2. Verformbarer vorderer Kotflügel nach Anspruch 1, **dadurch gekennzeichnet, dass**, da die Seitenwände (26, 28) einen oberen Flügel (32; 44), der mit der inneren Randleiste (20) verbunden ist, bzw. einen unteren Flügel (36; 46) aufweisen, der mit dem Fahrgestell (22) verbunden ist, die Seitenwände (26, 28) durch eine obere Wand (48) und eine untere Wand (50) voneinander entfernt gehalten werden, wobei die obere Wand die oberen Flügel (32, 44) und die untere Wand die unteren Flügel (36, 46) verbindet.

3. Verformbarer vorderer Kotflügel nach Anspruch 2, **dadurch gekennzeichnet, dass** die obere (48) und untere Wand (50) im Wesentlichen gleiche Breiten aufweisen und im Wesentlichen parallel zueinander sind.

4. Verformbarer vorderer Kotflügel nach einem der Ansprüche 1 bis 3, **dadurch gekennzeichnet, dass** die Seitenwände (26, 28) einen V-förmigen Querschnitt aufweisen.
